# EUROPEAN PATENT APPLICATION

(11) **EP 2 418 840 A2**
(43) Date of publication of application: **15.02.2012**
(21) Application number: 11177223.2
(22) Date of filing: 11.08.2011
(51) Int. Cl.: H04N 5/217

(54) **Imaging apparatus and signal processing method generating high quality image data**

(30) Priority: 11.08.2010 JP 2010180188; 16.08.2010 JP 2010181785; 17.03.2011 JP 2011059184; 17.03.2011 JP 2011059183
(71) Applicant: FUJIFILM Corporation, Tokyo (JP)
(72) Inventor: Ono, Shuji, Saitama-ken (JP)
(74) Representative: HOFFMANN EITLE

(57) **Abstract**

An imaging apparatus is equipped with: an imaging element having a plurality of photoelectric converting elements, each of which converts image information borne by input light into a pixel signal and outputs the pixel signal; pixel signal combining means, for combining the pixel signals output from each photoelectric converting element of the imaging element into groups of predetermined numbers of signals; and image signal processing means, for generating digital image data from the combined pixel signals. The pixel signal combining means combines the pixel signals such that pixel signals at the central portions of ranges of pixel signals to be combined are weighted to have higher gain than pixel signals at the peripheral portions of the ranges to obtain high quality digital image data.

## Description

The present invention is related to improvements in the quality of digital image signals obtained by an imaging apparatus equipped wi th imaging elements (photoelectric converting elements).

Conventional imaging devices equipped with: imaging elements constituted by a plurality of photoelectric converting elements such as CCD's and CMOS's, that convert image information borne by input light into pixel signals by each of the photoelectric converting elements and output pixel signals corresponding to the image information; and image signal processing means that generate digital image data by administering pixel signal processes/ digital signal processes such as A/D conversion, gradation conversion, color correction, frequency correction, and data compression to the pixel signals output from the imaging elements, are known.

The following problems are known to occur in the case that the image information borne by the input light is converted into pixel signals by discrete spatial sampling.

Problem 1: High frequency information is lost due to the limit of frequency transmission properties caused by a spatial sampling period.

Problem 2: Specific spatial frequency information is lost due to the shape of a spatial sampling window.

Problem 3: Wrap around distortion of high frequency information gets mixed into the low frequency information.

For this reason, accurately digitizing image information borne by input light into digital image data without excess or deficiency had been a difficult objective to attain.

Problem 1 is being resolved by the recent miniaturization of imaging elements. Meanwhile, the following problem has become an issue.

Problem 4: Because the sizes of elements have become small, the amount of noise has increased to deteriorate S/N ratios of signals and the number of pieces of unnecessary data has increased.

Hereinafter, the aforementioned Problems 1 through 4 will be described in detail with reference to the drawings. Figure 9 is a diagram for explaining the spatial sampling limit caused by a spatial sampling period. Figure 10 is a diagram for explaining loss of spatial frequency information due to the shape of a spatial sampling window. Figure 11 is a diagram for explaining wrap around distortion. Figure 12 is a diagram for explaining suppression of high frequency components by an optical low pass filters.

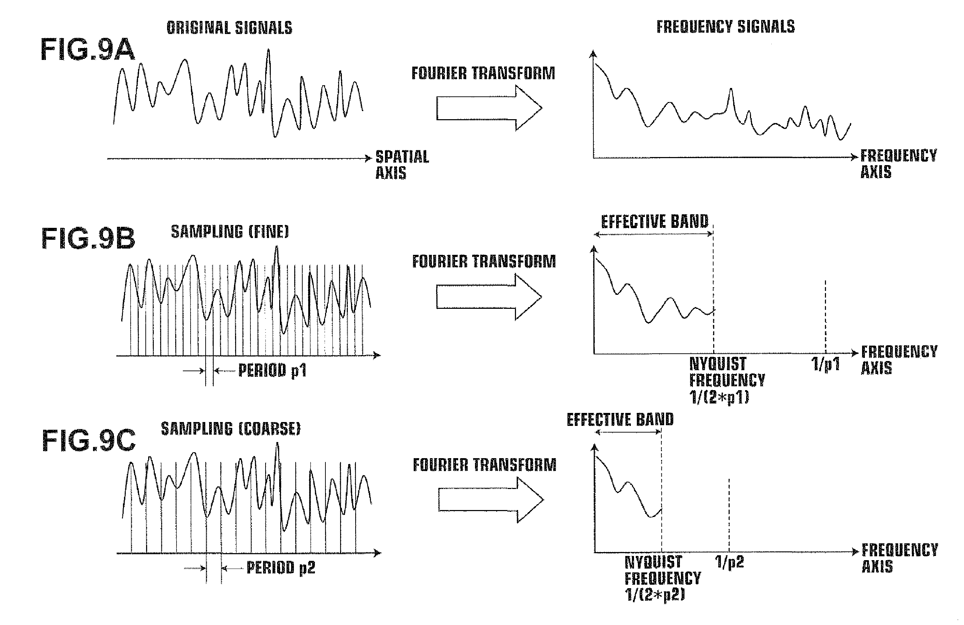

With respect to Problem 1, if a spatial sampling period is p, spatial frequency components higher than a Nyquist spatial frequency (1/2p) cannot be transmitted, as illustrated in Figure 9. Limits are generated, because the spatial sampling period p cannot be made infinitely small.

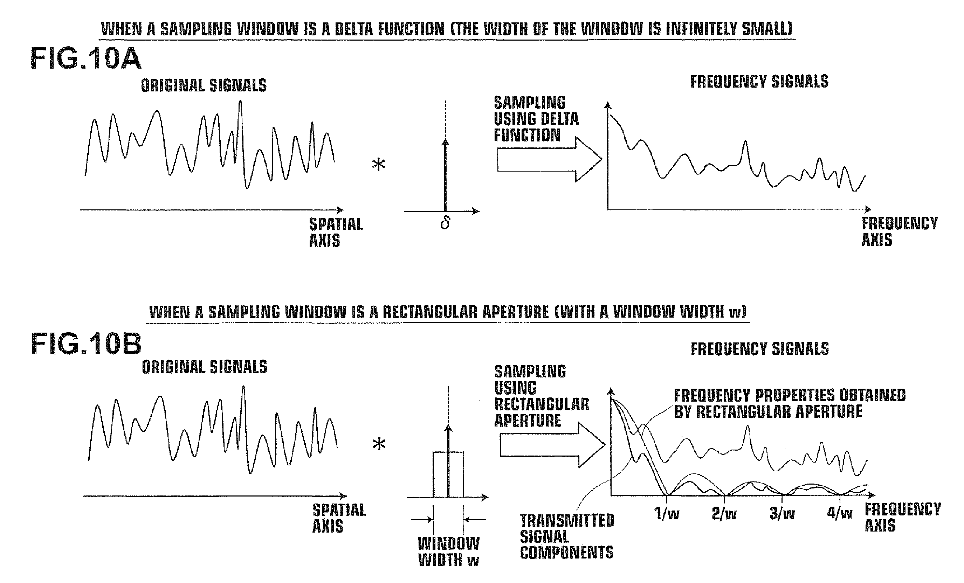

With respect to Problem 2, loss of specific spatial frequency components does not occur in the case that a spatial sampling window is infinitely small (the shape represented by a delta function), as illustrated in Figure 10. However, because a spatial sampling window cannot be infinitely small in actuality, loss of specific spatial frequency components in digital image data occurs depending on the size and shape of the spatial sampling window. For example, a rectangle is a commonly utilized shape of a conventional spatial sampling window. In this case, the spatial frequency properties of transmitted signals will be an ABS (Sinc) function. The positions of zero points of the ABS (Sinc) function are determined by the width w of the spatial sampling window. Gain becomes zero at 1/w, 2/w, 3/w, ... The spatial frequency components are not transmitted at all at these zero points, resulting in inaccurate and low quality digital image data.

With respect to Problem 3, if input signals that include spatial frequency components greater than or equal to the Nyquist spatial frequency (1/2p) are spatially sampled with a period p, the spatial frequency components higher than the Nyquist spatial frequency wrap around toward the lower frequency side of the Nyquist spatial frequency and become mixed therein. For this reason, wrap around distortion (noise) becomes overlapped in the low frequency information.

With respect to Problem 4, this problem is rooted in the principles of imaging elements.

In imaging apparatuses (such as digital cameras) that employ optical images via lenses as input light, and detect image information borne by the input light with imaging elements such as CCD's and CMOS's to generate digital image data, the aforementioned Problems 1 through 4 all deteriorate the image quality of digital images, which is a serious problem.

If the spatial sampling frequency p is decreased in order to solve Problem 1, the pixel size of a detector becomes smaller, and the S/N ratio deteriorates. In addition, production of the detector becomes difficult and expensive. Further, the number of pieces of digital data which are obtained becomes excessively large, and data processes, storage, transmission, and recording of the digital data become costly.

There is a known method, in which the spatial sampling window size is set to be larger than the spatial sampling period p in order to solve Problem 1. It is physically difficult to realize a spatial sampling window larger than the spatial sampling period p (an aperture ratio of 100% or greater). Therefore, in actuality, the size of the spatial sampling window is effectively increased by obtaining pixel signal while shifting the sampling window spatially/temporally (the pixel shifting method). However, the shape of the spatial sampling window becomes rectangular in this method, and therefore Problem 2 cannot be solved, and the problem that specific spatial frequency components within high frequency information will be lost still remains.

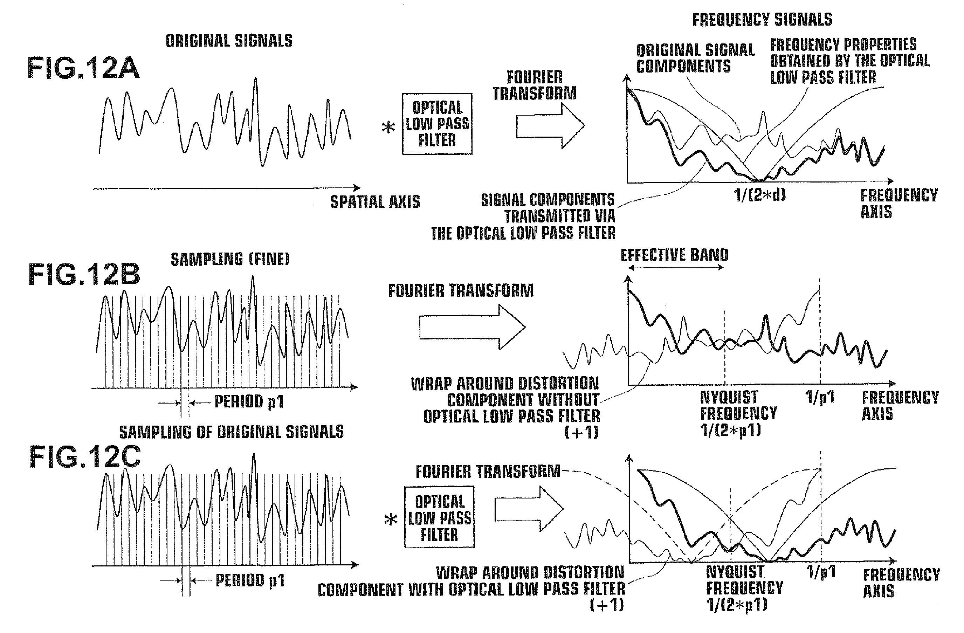

Conventionally, an optical low pass filter had been interposed between a lens and an imaging element as illustrated in Figure. 12, to suppress high frequency components that cause the wrap around distortion (noise), in order to solve Problems 3. However, optical low pass filters utilize the birefringence of optical crystals, which are extremely expensive parts. Therefore, such a configuration hinders cost reduction of products.

In addition, a conventional technique for suppressing the ratio of noise components to solve Problem 4 is that in which data of adjacent pixels are combined/multiplied and added (the binning function). For example such a technique combines the signals of four pixels in a 2x2 square. However, the shape of the spatial sampling window becomes rectangular in this technique, and therefore Problem 2 remains.

Japanese Unexamined Patent Publication No. 2002-320151 discloses an apparatus that employs the pixel shifting method, in which the effective aperture rate of imaging elements is set such that wrap around distortion (noise) components become minimal, to suppress the influence of wrap around distortion (noise) . In this case as well, however, the shape of the spatial sampling window becomes rectangular, therefore Problem 2 cannot be solved, and the problem that specific spatial frequency components within high frequency information will be lost still remains.

### SUMMARY OF THE INVENTION

The present invention has been developed in view of the foregoing circumstances. It is an object of the present invention to provide an imaging apparatus capable o generating high quality digital image data, and a signal processing method to be employed by the imaging apparatus.

A first imaging apparatus of the present invention comprises:
an imaging element equipped with a plurality of photoelectric converting elements, each of which converts image information borne by input light into a pixel signal and outputs the pixel signal;
pixel signal combining means, for combining the pixel signals output from each photoelectric converting element of the imaging element into groups of predetermined numbers of signals; and
image signal processing means, for generating digital image data from the combined pixel signals; and is characterized by:
   the pixel signal combining means combining the pixel signals such that pixel signals at the central portions of ranges of pixel signals to be combined are weighted to have higher gain than pixel signals at the peripheral portions of the ranges.

A first signal processing method of the present invention is for use in an imaging apparatus comprising:
an imaging element equipped with a plurality of photoelectric converting elements, each of which converts image information borne by input light into a pixel signal and outputs the pixel signal;
pixel signal combining means, for combining the pixel signals output from each photoelectric converting element of the imagine element into groups of predetermined numbers of signals; and
image signal processing means, for generating digital image data from the combined pixel signals; and is characterized by:
   the pixel signals being combined such that pixel signals at the central portions of ranges of pixel signals to be combined are weighted to have higher gain than pixel signals at the peripheral portions of the ranges.

In the first imaging apparatus and the first signal processing method of the present invention, it is preferable for the shape that connects the peaks of a graph having pixel positions as the horizontal axis and weighting coefficients as the vertical axis to be one of a Gaussian shape, a Bartlett shape, a Blackman shape, a Connors shape, a cosine shape, a Hammming shape, a Harping shape, or a shape that approximates one of these shapes.

Here, "a graph having pixel positions as the horizontal axis" refers to a graph in which the pixel positions are employed as the horizontal axis as is in the case that the pixels to be combined within a one dimensional range, and refers to a graph in which positions of pixels along a line that passes through the center of a combination range from one end to the other end of the combination range in the case that the pixels are combined within a two dimensional range.

When the pixel signals are combined into groups of the predetermined numbers of pixel signals, the pixel signals may be combined either prior to or following A/D conversion.

A second imaging apparatus of the present invention comprises:
an imaging element equipped with a plurality of photoelectric converting elements, each of which converts image information borne by input light into a pixel signal and outputs the pixel signal;
pixel signal combining means, for combining the pixel signals output from each photoelectric converting element of the imaging element into groups of predetermined numbers of signals; and
image signal processing means, for generating digital image data from the combined pixel signals; and is characterized by:
   the pixel signal combining means combining the pixel signals such that predetermined conditions are met, to generate new pixel signals.

A second signal processing method of the present invention is for use in an imaging apparatus comprising:
an imaging element equipped with a plurality of photoelectric converting elements, each of which converts image information borne by input light into a pixel signal and outputs the pixel signal;
pixel signal combining means, for combining the pixel signals output from each photoelectric converting element of the imaging element into groups of predetermined numbers of signals; and
image signal processing means, for generating digital image data from the combined pixel signals; and is characterized by;
the pixel signals being combined such that predetermined conditions are met, to generate new pixel signals.

In the second imaging apparatus and the second signal processing method of the present invention, the pixel signal combining means may adjust the number of pixel signals to be combined such that Condition (2) is satisfied with a margin of error of ±5% or less to change an effective spatial sampling period pv of the imaging element, in the case that Condition (1) is satisfied.
Condition 1: Sco<1/p
Condition 2: pv=1/(2·Sco)
wherein Sco: the upper spatial frequency limit of spatial frequency components of the image information (expressed as cycles/cm, for example); p: the spatial sampling period of the imaging element (expressed as cm, for example); and pv: the effective spatial sampling period of the imaging element (expressed as cm, for example).

The above abbreviations are as described here, and the same applied in the following description, and therefore detailed explanations thereof will be omitted.

When the pixel signals are combined into groups of the predetermined numbers of pixel signals, the pixel signals may be combined either prior to or following A/D conversion.

The first imaging apparatus and the first signal processing method of the present invention combine pixel signals such that pixel signals at the central portions of ranges of pixel signals to be combined are multiplied by greater weighting coefficients to have higher gain than pixel signals at the peripheral portions of the ranges, in an imaging apparatus comprising an imaging element equipped with a plurality of photoelectric converting elements, each of which converts image information borne by input light into a pixel signal and outputs the pixel signal; pixel signal combining means, for combining the pixel signals output from each photoelectric converting element of the imaging element into groups of predetermined numbers of signals; and image signal processing meons, for generating digital image data from the combined pixel signals. Therefore, the spatial frequency properties during spatial sampling do not include any points at which gain becomes zero, and gain gradually decreases for higher frequencies. Therefore, no points at which gain becomes zero are generated during spatial sampling, resulting in elimination of loss of frequency information. In addition, because the high frequency components have low gain, the influence of wrap around distortion is reduced, even if wrap around distortion is overlapped onto low frequency components. Further, the S/N ratio can be improve, because pixel signals output from a plurality of photoelectric converting elements are combined. This configuration enables obtainment of high quality digital image data.

In the case that the shape that connects the peaks of a graph having pixel positions as the horizontal axis and weighting coefficients as the vertical axis to be one of a Gaussian shape, a Bartlett shape, a Blackman shape, a Connors shape, a cosine shape, a Hamming shape, a Hanning shape, or a shape that approximates one of these shapes, the advantageous effects of the present invention can be more effectively obtained.

The second imaging apparatus and the second signal processing method of the present invention combine pixel signals such that predetermined conditions are met to generate new pixel signals, in an imaging apparatus comprising an imaging element equipped with a plurality of photoelectric converting elements, each of which converts image information borne by input light into a pixel signal and outputs the pixel signal; pixel signal combining means, for combining the pixel signals output from each photoelectric converting element of the imaging element into groups of predetermined numbers of signals; and image signal processing means, for generating digital image data from the combined pixel signals. The predetermined conditions are, for example, to adjust the number of pixel signals to be combined such that Condition (2) below is approximated or satisfied with a margin of error of ±5% or less to change an effective spatial sampling period pv of the imaging element, in the case that Condition (1) below is satisfied. Therefore, the influence of wrap around distortion can be eliminated. Further, the S/N ratio can be improved, because analog pixel signals output from a plurality of pixels are combined. This configuration enables obtainment of high quality digital image data. In addition, because the number of pixels that constitute the digital image data is thinned while maintaining a number of pixels necessary to sufficiently reproduce the image information, the data size can be decreased while maintaining the quality of the digital image data.
Condition 1: Sco<1/p
Condition 2: pv=1/(2·Sco)

### BRIEF DESCRIPTION OF THE DRAWINGS

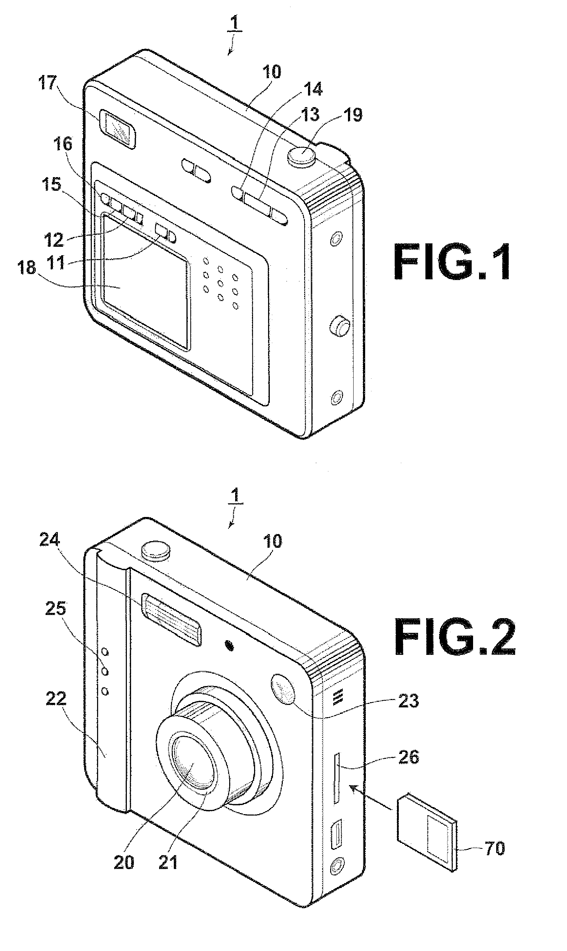

Figure 1 is a rear view of a digital camera according to a first embodiment of the present invention.
Figure 2 is a front view of the digital camera of Figure 1.

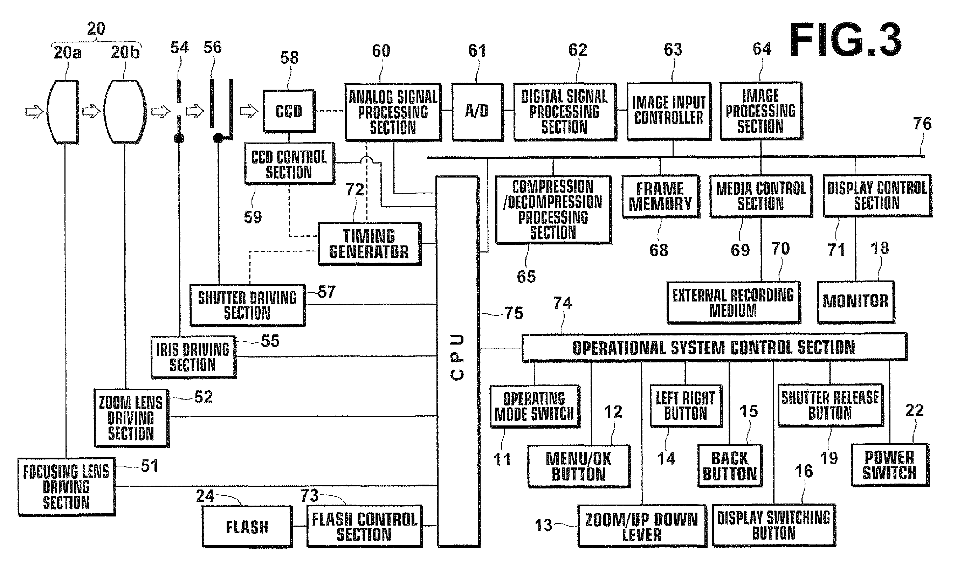

Figure 3 is a functional block diagram of the digital camera of Figure 1.

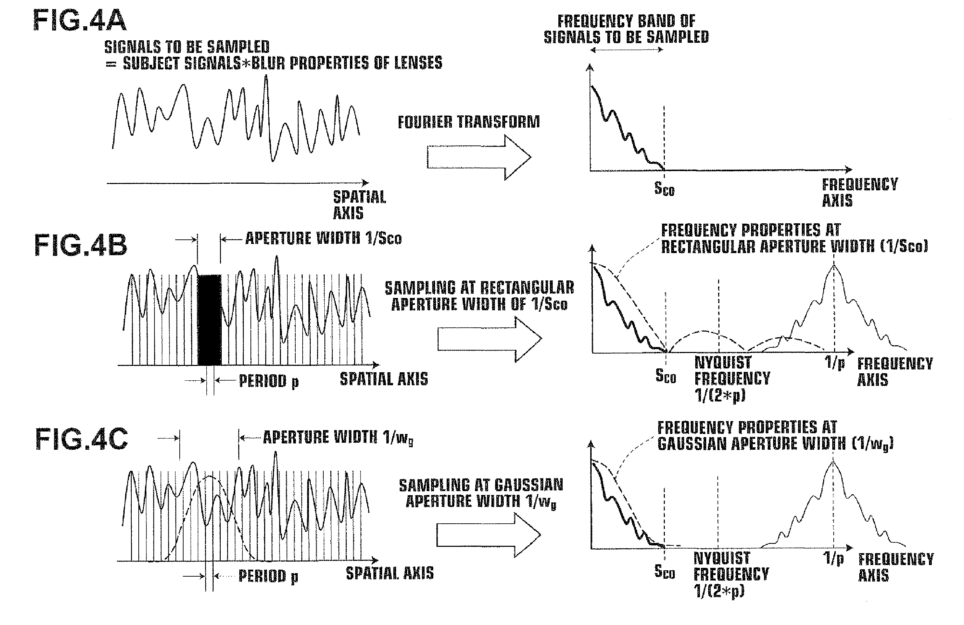

Figure 4 is a collection of diagrams for explaining a spatial sampling process performed by the first embodiment.

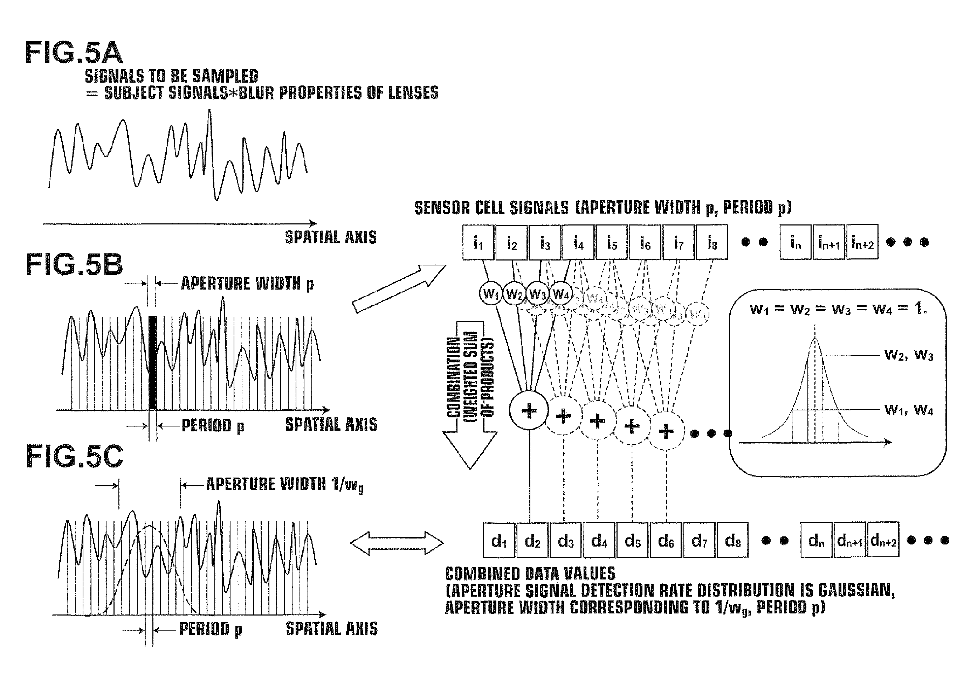

Figure 5 is a collection of diagrams for explaining a pixel signal combining process performed by the first embodiment.

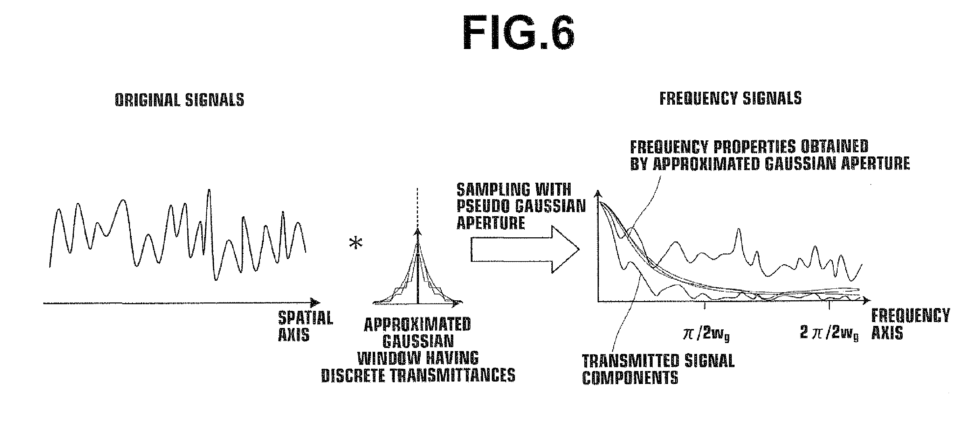

Figure 6 is a diagram for explaining A/D conversion properties of a different digital camera.

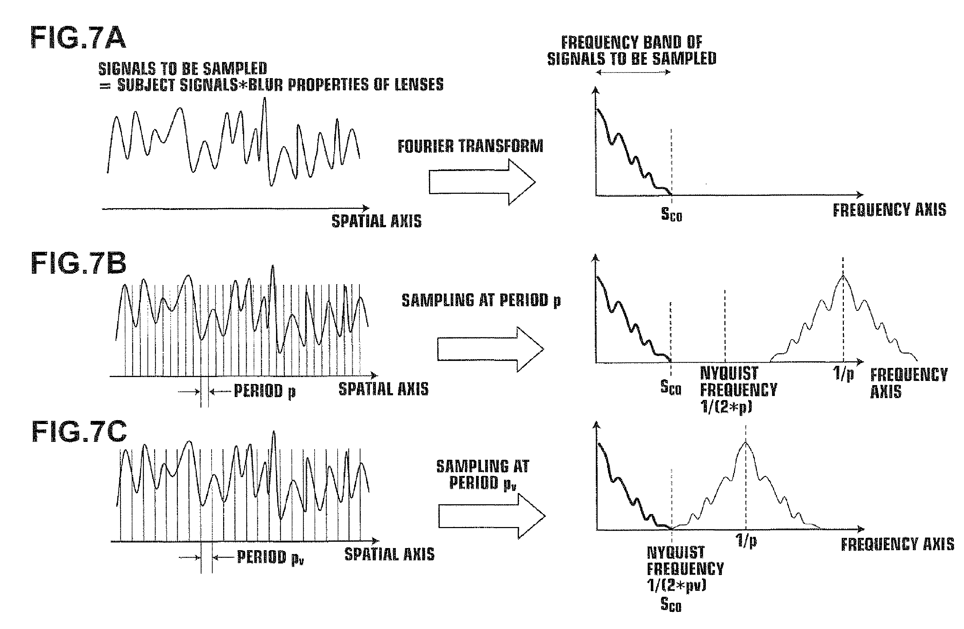

Figure 7 is a collection of diagrams for explaining a spatial sampling process performed by a second embodiment of the present invention.

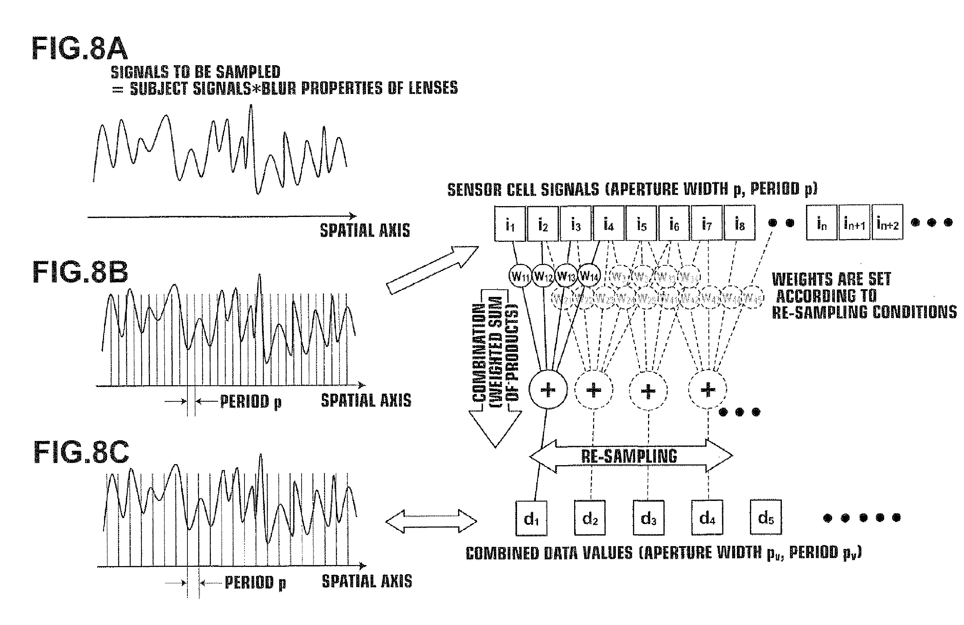

Figure 8 is a collection of diagrams for explaining a pixel signal combining process performed by the second embodiment.
Figure 9 is a collection of diagrams for explaining a spatial sampling limit caused by a spatial sampling period.
Figure 10 is a collection of diagrams for explaining loss of spatial frequency information due to the shape of a spatial sampling window.

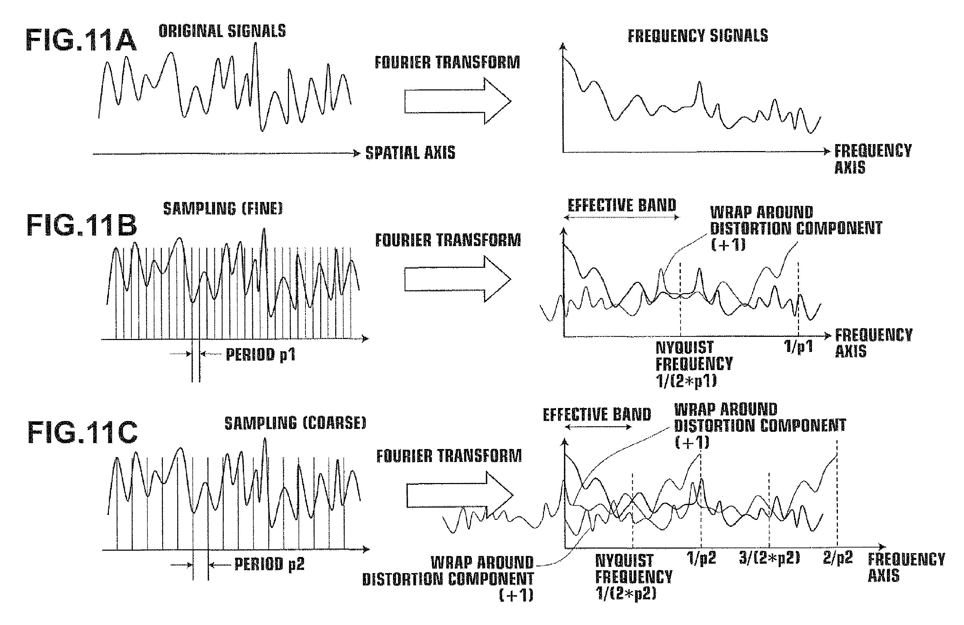

Figure 11 is a collection of diagrams for explaining wrap around distortion.
Figure 12 is a collection of diagrams for explaining suppression of high frequency components by an optical low pass filter.

### DESCRIPTION OF THE PREFERRED EMBODIMENTS

Hereinafter, a first embodiment of the present invention will be described with reference to the accompanying drawings. A1 digital camera 1 will be described as an example of an imaging apparatus according to the first embodiment of the present invention. Figure 1 is a rear view of the digital camera 1, Figure 2 is a front view of the digital camera 1, and Figure 3 is a functional block diagram of the digital camera 1.

As illustrated in Figure 1, the digital camera 1 has an operation mode switch 11, a menu/OK button 12, a zoom/up-down lever 13, right-left arrow buttons 14, a Back button 15, and a display switching button 16, all of which serve as interfaces for operation by a photographer and are located on the rear surface of a main body 10 thereof. In addition, the digital camera 1 has a viewfinder 17 for photography and a monitor 18 for photography and playback on the rear surface of the main body 10. Further, a shutter release button 19 is provided on the upper surface of the main body 10.

The operation mode switch 11 is a slide switch for changing the operation mode of the digital camera 1 among a still image photography mode, a moving image photography mode, and a playback mode. By pressing the menu/OK button 12, various menus for setting a photography mode, a flash emission mode, the number of pixels to be recorded, sensitivity, etc. are displayed on the monitor 18. The menu/OK button is also used to confirm settings and selections based on the menus displayed on the monitor 18.

When the zoom/up-down lever 13 is slid up or down during photography, zooming of the camera can be adjusted for telephotography or wide angle photography. When the lever 13 is slid up or down during input of various settings, a cursor in a menu screen displayed on the monitor 18 can be moved up or down. The right-left arrow buttons 14 are used to move the cursor to the right and to the left in a menu screen displayed on the monitor 18 during input of various settings.

Pressing the Back button 15 stops setting operations and displays an immediately preceding screen on the monitor 18. By pressing the display switching button 16, the monitor 18 and display of various guides and characters thereon can be turned ON and OFF. The viewfinder 17 is for a user to view through to determine compositions and to focus during photography. Images of subjects which are viewed through the viewfinder 17 are displayed via a finder window 23 provided on the front surface of the main body 10.

The shutter release button 19 is an operation button capable of two step operations of half depression and full depression. When the shutter button is depressed, a half depression signal or a full depression signal is output to a CPU 75 via an operational system control section 74.

The contents of settings, input through operation of the buttons, the lever, and the switch, can be confirmed by display on the monitor 18, a lamp in the viewfinder, and the position of the slide lever, for example. The monitor 18 functions as an electronic viewfinder by displaying through the lens images for confirmation of the subject at the time of photography. The monitor 18 also displays still images or moving images, which are played back after photography, in addition to the various kinds of menus. Photography is performed when a user fully depresses the shutter release button 19, and an image which is displayed on the monitor 19 is stored as a photographed image.

As illustrated in Figure 2, an imaging lens 20, a lens cover 21, a power switch 22, the finder window 23, a flash 24, and a self timer lamp 5 are provided on the front surface of the main body 10. A media slot 26 is provided in the side surface of the body 2.

The imaging lens 20 focuses images of subjects on a predetermined image forming surface (such as a CCD within the main body 10), and is constituted by a focus lens, a zoom lens, and the like. The lens cover 21 covers the surface of the imaging lens 20 when the digital camera 1 is turned OFF, during playback mode, etc., to protect the imaging lens 20 from contamination and dirt.

The power switch 22 is a switch for switching the digital camera 1 ON and OFF. The flash 24 momentarily emits light necessary for imaging toward subjects when the shutter release button 19 is depressed and a shutter within the main body 10 is open. The self timer lamp 25 emits light to let subjects know the timing of a shutter opening/closing operation, that is, the initiation and cessation of exposure, when performing imaging using a self timer. The media slot 26 is an opening into which an external recording medium 70, such as a memory card, is loaded. Data is written into and read out from the external recording medium 70 when it is loaded within the media slot 26.

As illustrated in Figure 3, the digital camera 1 has an operational system including the operation mode switch 11, the menu/OK button 12, the zoom/up-down lever 13, the right-left arrow buttons 14, the Back button 15, the display switching button 16, the shutter release button 19, and the power switch 22 described above. In addition, an operational system control section 74 that functions as an interface for sending the contents of operations of the switches, buttons, and levers to the CPU 75 (Central Processing section) is also provided in the operating system.

The imaging lens 20 comprises a focusing lens 20a and a zoom lens 20b. Each of the lenses can be moved along their optical axis by a focusing lens driving section 51 and a zoom lens driving section 52 each comprising a motor and a motor driver. The focusing lens driving section 51 controls the movement of the focusing lens 20a in a stepwise manner, based on control from the CPU 75. The zoom lens driving section 52 controls the movement of the zoom lens 20b, based on data representing the amount that the zoom/up-down lever 13 is operated.

An iris 54 is driven by an iris driving section 55 comprising a motor and a motor driver. A shutter 56 is a mechanical shutter and is driven by a shutter driving section 57 comprising a motor and a motor driver. The shutter driving section 57 opens and closes the shutter 56 according to a signal generated by depressing the shutter release button 19.

A CCD 58 is provided as an imaging device behind the optical system described above. The CCD 58 has a photoelectric surface, on which a plurality of photoreceptor elements are arranged two-dimensionally. Light from the subject passing through the optical system forms an image on the surface and is subjected to photoelectric conversion. A micro-lens array (not shown) for focusing the light on each pixel and a color filter array (not shown), in which filters for R, G, and B colors are arranged regularly, are located in front of the photoelectric surface. The CCD 58 outputs an electric charge stored at each of the pixels as serial analog image data for each line while synchronizing with a vertical transfer clock signal and a horizontal transfer clock signal supplied from a CCD control section 59. The time during which the electric charge is stored at each of the pixels, that is, an exposure time is determined by an electronic shutter driving signal output from the CCD control section 59.

Image signals output from the CCD 58 are input to an analog signal processing section 60. The analog signal processing section 60 comprises a correlated double sampling (CDS) circuit for removing noise from the image signals, and an automatic gain controller (AGC) for adjusting a gain of the image signals. Then, the image signals are converted into digital image data by an A/D converter (ADC) 61. The A/D converted digital image data are input to an image input controller 63 after basic digital signal processes, such as digital noise removal, nonlinear gradation conversion, and digital frequency enhancement are administered thereon by a digital signal processing section 62. Here, the digital image data are arranged in an order corresponding to the spatial distribution of a subject image which has passed through the optical system, and bear data having intensity values corresponding to the optical intensities within the subject image.

A timing generator 72 generates timing signals. The timing signals are input to the shutter driving section 57, the CCD control section 59, and the analog signal processing section 60 to synchronize the operation of the shutter release button 19 with the opening/closing of the shutter 56, electric charges being read into the CCD 58, and processing by the analog signal processing section 60. A flash control section 73 controls light emission from the flash 24.

The image input controller 63 writes the digital image data input from the digital signal processing section 62 in a frame memory 68. The frame memory 68 is a memory used as workspace for various types of digital image processes (signal processing) on the image data, which will be described later, and comprises an SDRAM (Synchronous Dynamic Random Access Memory) that carries out data transfer in synchronization with a bus clock signal of a predetermined period, for example. The image input controller 63 is also capable of recording a preliminary image which is obtained prior to actual photography, according to commands to emit/not emit flash during photography.

Preliminary images are obtained during imaging (a light adjusting process) for determining photography conditions. A display control section 71 is used to display the image data stored in the frame memory 68 as a through the lens image on the monitor 18. The display control section 71 converts luminance (Y) signals and color (C) signals into unified composite signals, and outputs the composite signals to the monitor 18. The through the lens image is obtained at predetermined intervals and displayed on the monitor 18 when the photography mode is selected. In addition, the display control section displays images based on image data included in image files, which are stored in the external recording medium 70 and read out by a media control section 69.

An image processing section 64 administers high level image processes onto image data of actual images, such as color space correction, YC processes, multiple frequency noise reduction, and subject recognition processes.

The upper limit of pixels of actual images is determined by the number of pixels of the CCD 58. For example, however, the number of pixels to be recorded can be changed by user settable image quality settings (settings such as fine and normal). Meanwhile, the number pixels in preliminary images may be less than that of actual images. For example, the number of pixels of preliminary images may be approximately 1/16 that of the actual images.

A compression/decompression section 67 carries out compression processes to a format such as JPEG on the image data, which has been subjected to the image correction processes and the like by the image processing section 64, to generate an image file. Accompanying information is added as tags to the image file, based on various data formats. The compression/decompression unit 67 also reads compressed images files from the external recording medium 70 in the playback mode, and administers decompression processes thereon. Image data, on which the decompression processes have been administered, output to the display control section 71, and the display control section 71 causes images based on the image data to be displayed on the monitor 18,

The media control section 69 corresponds to the media slot 26 of Figure 2, and carries out image-file reading and writing from and to the external recording medium 70. The CPU 75 controls each of the components of the digital camera 1 in response to operations of the various buttons, levers, and switches as well as signals from the functional blocks. The CPU also functions as a recording means, for recording image files in an internal memory (not shown)

A data bus 7 is connected to the image input controller 63, the image processing section 63, the compression/decompression processing section 65, the frame memory 68, the control sections 69 and 71, and the CPU 75. Various signals and data are transmitted through the data bus 76.

Next, the processes performed by the digital camera 1 when obtaining digital image data will be described. Figure 4 is a diagram for explaining a spatial sampling process performed by the first embodiment, and Figure 5 is a diagram for explaining a pixel signal combining process performed by the first embodiment.

When photography is performed, the CCD 58 photoelectrically converts a subject image which is focused on the photoelectric converting surface thereof via the imagine lens 20 and accumulates electric charges corresponding to the subject image. Then, the CCD 58 reads out the charges accumulated for each pixel line by line, and outputs the electric charges synchronized with vertical transfer clock signals and horizontal transfer clock signals supplied by the CCD control section 59.

At this time, in the first embodiment, a pixel signal combining means provided in the analog signal processing section 60 such that the shape of a spatial sampling window within an aperture width becomes a Gaussian shape as illustrated in Figure 4C.

The specific process for forming the spatial sampling window within the aperture width to be a Gaussian shape will be described with reference to Figure 5. First, a number of pixels n corresponding to a predetermined aperture width (1/wg) is obtained (note that in Figure 5, a case is illustrated in which pixels are combined within a one dimensional range for the sake of simplicity; however, pixels are combined within a two dimensional range in the present embodiment as will be described later). Then, pixel signals of pixels within square regions (n×n) having the number of pixels n as the length of each side are combined. At this time, weighting is performed such that the shape of the spatial sampling window becomes a Gaussian shape. The above process is repeated while shifting the square region one pixel at a time. Thereby, the number of pixels in the image data will be the same as the number of pixels of the CCD 58.

The pixel signals (the collection of combined pixel signals) obtained in the manner described above are converted to digital image data by the A/D converter 61.

Thereby, the spatial frequency properties of the digital image data do not include any points at which gain becomes zero, and gain gradually decreases for higher frequencies. Therefore, no points at which gain becomes zero are generated during spatial sampling resulting in elimination of loss of frequency information. In addition, because the high frequency components have low gain, the influence of wrap around distortion is reduced, even if wrap around distortion is overlapped onto low frequency components. Further, the S/N ratio can be improved, because pixel signals output from a plurality of photoelectric converting elements are combined. This configuration enables obtainment of high quality digital image data.

Note that as an alternate method, the pixel signals output from each pixel of the CCD 58 may be converted into digital signals by the A/D converter 61, then the digital pixel signals of pixels within square regions (n×n) may be weighted and combined by the digital signal processing section 62 such that the shape of the spatial sampling window becomes a Gaussian shape. Pixel signals equivalent to those in which the shape of the spatial sampling window is virtually formed as a Gaussian shape as illustrated in Figure 4C can be obtained in this case as well.

In addition, with respect to the shape of the spatial sampling window, it is not necessary for the shape to be a perfect Gaussian shape. If the shape of the spatial sampling window approximates a Gaussian shape as illustrated in Figure 6, higher quality digital image data can be obtained compared to those obtained with spatial sampling windows having rectangular transmittance distributions.

In addition, the shape of the spatial sampling window may be a Bartlett shape, a Blackman shape, a Connors shape, a cosine shape, a Hamming shape, or a Hanning shape, instead of the Gaussian shape. Note that higher quality digital image data can be obtained compared to those obtained with spatial sampling windows having rectangular transmittance distributions even if the shape of the spatial sampling window is not perfectly one of the aforementioned shapes, but approximates these shapes.

Next, an imaging apparatus according to a second embodiment of the present invention will be described in detail. A digital camera 1 similar to that of the first embodiment will be described as an example of the imaging apparatus according to the second embodiment. The construction of the digital camera 1 is the same as that of the first embodiment, and therefore a detailed description thereof will be omitted.

The processes for obtaining digital image data in the second embodiment will be described. Figure 7 is a diagram for explaining a spatial sampling process performed by the second embodiment, and Figure 8 is a diagram for explaining a pixel signal combining process performed by the second embodiment.

When photography is performed, the CCD 58 photoelectrically converts a subject image which is focused on the photoelectric converting surface thereof via the imaging lens 20 and accumulates electric charges corresponding to the subject image. Then, the CCD 58 reads out the charges accumulated for each pixel line by lines and outputs the electric charges synchronized with vertical transfer clock signals and horizontal transfer clock signals supplied by the CCD control section 59.

In the case that the upper limit Sco of the spatial frequencies of spatial frequency components of image information is smaller than the inverse of a spatial sampling period (pixel pitch) p of the CD 58 as illustrated in Figure 7B, that is, in the case that Condition 1 below is satisfied, wrap around distortion will not overlap original signals. This state will continue until an effective spatial period pv of the CCD 58 exceeds the inverse of a frequency two times the upper limit Sco of spatial frequencies.

Accordingly, in the second embodiment, in the case that Condition (1) is satisfied as illustrated in Figure 7B, the number of pixel signals to be combined is adjusted to most closely approximate Condition (2) below, as illustrated in Figure 7C, to change the effective spatial sampling period pv of the CCD 58.
Condition 1: Sco<1/p
Condition 2; pv=1/(2·Sco)
wherein
Sco: the upper spatial frequency limit of spatial frequency components of the image information (expressed as cycles/cm, for example)
p: the spatial sampling period of the imaging element (expressed as cm, for example)
pv: the effective spatial sampling period of the imaging element (expressed as cm, for example)

The specific processes for adjusting the effective spatial sampling period pv will be described with reference to Figure 8. First, pixel signals of adjacent pixels within square regions (n ×n) having the number of pixels n as the length of each side are sequentially combined while shifting the square region one pixel at a time, to obtain a number of pixel signals equivalent to the number of pixels of the CCD 58. Then, an optimal effective spatial sampling period pv is calculated by Condition 2, and the pixel signals are sampled again using the optimal effective spatial sampling period pv, to thin the number of signals and to obtain re-sampled pixel signals.

The pixel signals (the collection of combined pixel signals) obtained in the manner described above are converted to digital image data by the A/D converter 61.

By obtaining the pixel signals in the manner described above the influence of wrap around distortion can be eliminated. Further, the S/N ratio can be improved, because analog pixel signals output from a plurality of pixels are combined. This configuration enables obtainment of high quality digital image data. In addition, because the numbers of pixels that constitute the digital image data is thinned while maintaining a number of pixels necessary to sufficiently reproduce the image information, the data size can be decreased while maintaining the quality of the digital image data.

Note that as an alternate method, the pixel signals output from each pixel of the CCD 58 may be converted into digital signals by the A/D converter 61, then the digital pixel signals may be re-sampled in the same manner as that described above, to obtain the same advantageous effects.

The effective spatial sampling period pv of the CCD 58 is not limited to that described above. The advantageous effects of the second embodiment can be sufficiently obtained by adjusting the number of pixel signals to be combined such that Condition 2 is satisfied with a margin or error of ±5% or less, in the case that Condition (1) is satisfied.
Condition 1: Sco<1/p
Condition 2: pv=1/(2·Sco)

Imaging apparatuses according to the present invention has been described in detail above. However, the present invention is not limited to the above embodiments.

For example, the imaging apparatuses of the present invention were described as digital cameras. However, the present invention is not limited to application to digital cameras. The present invention may be applied to other electronic devices, such as digital video cameras, and cellular telephones and game terminals equipped with electronic imaging functions.

In addition, various improvements and modifications may be added as long as they do not stray from the scope of the inventions as claimed hereinafter.

## Claims

1. An imaging apparatus, comprising:
an imaging element equipped with a plurality of photoelectric converting elements, each of which converts image information borne by input light into a pixel signal and outputs the pixel signal;
pixel signal combining means, for combining the pixel signals output from each photoelectric converting element of the imaging element into groups of predetermined numbers of signals; and
image signal processing means, for generating digital image data from the combined pixel signals; **characterized by**:
the pixel signal combining means combining the pixel signals such that pixel signals at the central portions of ranges of pixel signals to be combined are weighted to have higher gain than pixel signals at the peripheral portions of the ranges.

2. An imaging apparatus as defined in Claim 1, **characterized by**:
the pixel signal combining means combining the predetermined numbers of pixel signals prior to the pixel signals being A/D converted.

3. An imaging apparatus as defined in Claim 1, **characterized by**:
the pixel signal combining means combining the predetermined numbers of pixel signals after the pixel signals are A/D converted.

4. An imaging apparatus as defined in any one of Claims 1 through 3, **characterized by**:
the shape that connects the peaks of a graph having pixel positions as the horizontal axis and weighting coefficients as the vertical axis being a Gaussian shape.

5. An imaging apparatus as defined in any one of Claims 1 through 3, **characterized by**:
the shape that connects the peaks of a graph having pixel positions as the horizontal axis and weighting coefficients as the vertical axis being a Bartlett shape.

6. An imaging apparatus as defined in any one of Claims 1 through 3, **characterized by**:
the shape that connects the peaks of a graph having pixel positions as the horizontal axis and weighting coefficients as the vertical axis being a Blackman shape.

7. An imaging apparatus as defined in any one of Claims 1 through 3, **characterized by**:
the shape that connects the peaks of a graph having pixel positions as the horizontal axis and weighting coefficients as the vertical axis being a Connors shape.

8. An imaging apparatus as defined in any one of Claims 1 through 3, **characterized by**:
the shape that connects the peaks of a graph having pixel positions as the horizontal axis and weighting coefficients as the vertical axis being a cosine shape.

9. An imaging apparatus as defined in any one of Claims 1 through 3, **characterized by**:
the shape that connects the peaks of a graph having pixel positions as the horizontal axis and weighting coefficients as the vertical axis being a Hamming shape.

10. An imaging apparatus as defined in any one of Claims 1 through 3, **characterized by**:
the shape that connects the peaks of a graph having pixel positions as the horizontal axis and weighting coefficients as the vertical axis being a Hanning shape.

11. A signal processing method for use in an imaging apparatus comprising:
an imaging element equipped with a plurality of photoelectric converting elements, each of which converts image information borne by input light into a pixel signal and outputs the pixel signal;
pixel signal combining means, for combining the pixel signals output from each photoelectric converting element of the imaging element into groups of predetermined numbers of signals; and
image signal processing means, for generating digital image data from the combined pixel signals; **characterized by**:
the pixel signals being combined such that pixel signals at the central portions of ranges of pixel signals to be combined are weighted to have higher gain than pixel signals at the peripheral portions of the ranges.

12. An imaging apparatus, comprising:
an imaging element equipped with a plurality of photoelectric converting elements, each of which converts image information borne by input light into a pixel signal and outputs the pixel signal;
pixel signal combining means, for combining the pixel signals output from each photoelectric converting element of the imaging element into groups of predetermined numbers of signals; and
image signal processing means, for generating digital image data from the combined pixel signals; **characterized by**:
the pixel signal combining means combining the pixel signals such that predetermined conditions are met, to generate new pixel signals.

13. An imaging apparatus as defined in Claim 12, **characterized by**:
the pixel signal combining means adjusting the number of pixel signals to be combined to most closely approximate Condition (2) to change an effective spatial sampling period pv of the imaging element, in the case that Condition (1) is satisfied.
Condition 1: Sco<1/p
Condition 2: pv=1/(2·Sco)
wherein Sco: the upper spatial frequency limit of spatial frequency components of the image information; p: the spatial sampling period of the imaging element; andpv: the effective spatial sampling period of the imaging element.

14. An imaging apparatus as defined in Claim 12, **characterized by**:
the pixel signal combining means adjusting the number of pixel signals to be combined such that Condition (2) is satisfied with a margin of error of ±5% or less to change an effective spatial sampling period pv of the imaging element, in the case that Condition (1) is satisfied.
Condition 1: sco<1/p
Condition 2: pv=1/(2·Sco)
wherein Sco: the upper spatial frequency limit of spatial frequency components of the image information; p: the spatial sampling period of the imaging element; and pv: the effective spatial sampling period of the imaging element.

15. An imaging apparatus as defined in any one of Claims 12 through 14, **characterized by**:
the pixel signal combining means combining the predetermined numbers of pixel signals prior to the pixel signals being A/D converted.

16. An imaging apparatus as defined in any one of Claims 12 through 14, **characterized by**:
the pixel signal combining means combining the predetermined numbers of pixel signals after the pixel signals are A/D converted.

17. A signal processing method for use in an imaging apparatus comprising:
an imaging element equipped with a plurality of photoelectric converting elements, each of which converts image information borne by input light into a pixel signal and outputs the pixel signal;
pixel signal combining means, for combining the pixel signals output from each photoelectric converting element of the imaging element into groups of predetermined numbers of signals; and
image signal processing means, for generating digital image data from the combined pixel signals; **characterized by**:
the pixel signals being combined such that predetermined conditions are met, to generate new pixel signals.

18. A signal processing method as defined in Claim 17, **characterized by**:
the number of pixel signals to be combined being adjusted to most closely approximate Condition (2) to change an effective spatial sampling period pv of the imaging element, in the case that Condition (1) is satisfied.
Condition 1: Sco<1/p
Condition 2: pv=1/(2·Sco)
wherein Sco: the upper spatial frequency limit of spatial frequency components of the image information; p: the spatial sampling period of the imaging element; and pv: the effective spatial sampling period of the imaging element.

19. A signal processing method as defined in Claim 17, **characterized by**:
the number of pixel signals to be combined being adjusted such that Condition (2) is satisfied with a margin of error of ±5% or less to change an effective spatial sampling period pv of the imaging element, in the case that Condition (1) is satisfied.
Condition 1: Sco<1/p
Condition 2: pv=1/(2·Sco)
wherein Sco: the upper spatial frequency limit of spatial frequency components of the image information; p: the spatial sampling period of the imagine element; and pv: the effective spatial sampling period of the imaging element.
